# EUROPÄISCHE PATENTSCHRIFT

(11) **EP 3 164 314 B1**
(45) Veröffentlichungstag und Bekanntmachung des Hinweises auf die Patenterteilung: **25.03.2020**
(21) Anmeldenummer: 15774563.9
(22) Anmeldetag: 28.09.2015
(51) Int. Cl.: B61D 35/00

(54) **TOILETTENEINRICHTUNG MIT RÜCKSPÜLFUNKTION FÜR EINEN PARTIKELFILTER**
TOILET DEVICE HAVING A BACKFLUSHING FUNCTION FOR A PARTICLE FILTER
TOILETTES À FONCTION DE LAVAGE À CONTRE-COURANT POUR UN FILTRE À PARTICULES

(30) Priorität: 30.09.2014 DE 102014219824
(43) Veröffentlichungstag der Anmeldung: 10.05.2017
(73) Patentinhaber: Siemens Mobility GmbH, 81739 München (DE)
(72) Erfinder: SCHLESS, Günther, 46485 Wesel (DE)
(86) Internationale Anmeldenummer: PCT/EP2015/072212
(87) Internationale Veröffentlichungsnummer: WO 2016/050670

(56) Entgegenhaltungen:
- EP-A1- 2 484 574
- EP-A1- 2 524 998
- DE-A1- 10 229 799
- DE-A1-102010 007 115
- DE-B3-102013 205 084
- DE-U1-202013 009 406
- JP-A- 2001 079 594

## Beschreibung

Die Erfindung betrifft eine Toiletteneinrichtung für ein Schienenfahrzeug mit spülwasserführenden Installationen und abwasserführenden Installationen und ein Verfahren zum Betrieben der Toiletteneinrichtung, wobei die spülwasserführenden Installationen einen Zwischenbehälter zur Speicherung von Spülwasser und eine Versorgungsleitung zur Zufuhr von Spülwasser zum Zwischenbehälter umfassen, wobei die Versorgungsleitung einen Filter zur Filterung des dem Zwischenbehälter zugeführten Spülwassers umfasst.

Eine derartige Toiletteneinrichtung ist in der DE 10 2010 007 115 A1 offenbart.

Für Toiletteneinrichtungen in Schienenfahrzeugen werden regelmäßig Kompaktvakuumtoiletten eingesetzt. Diese werden mit einer Betriebsspannung, Druckluft und Frischwasser zum Spülen versorgt. Die Anlagen sind auf einen möglichst geringen Wasserverbrauch optimiert und besitzen in den zu- und abführenden Wasserleitungen vergleichsweise geringe Querschnitte. Wegen des geringen Wasserverbrauchs beim Spülen und der kleinen Rohrquerschnitte können Fremdkörper, die mit dem Frischwasser eingetragen werden, Bauteile zwischen einem Frischwasseranschluss und Spüldüsen der Toilette verstopfen und blockieren. Als Folge können dadurch Spüldüsen und Ventile beschädigt werden und das System ausfallen.

Die Fremdkörper können auf unterschiedliche Weise in das Wassersystem der Toiletteneinrichtung gelangen. So kann z.B. Rost oder Sand im Frischwasser einer landseitig angeordneten Versorgungseinrichtung mitgeführt werden. Auch Biomaterial oder Steine können sich in ortsfesten Versorgungseinrichtungen wie z.B. Tanks und Leitungen einer Füllstation ansammeln, insbesondere wenn diese nicht verschlossen sind. Bei einem Befüllvorgang werden diese Fremdkörper dann in einen Frischwassertank des Schienenfahrzeugs geschwemmt, aus welchem das Spülwasser zum Spülen der Toilette stammt. Auch in Tanks, Leitungen und Armaturen des Schienenfahrzeuges können sich Mineralien und Kalk ablagern und als Platten oder Partikel wieder abplatzen und als Fremdkörper mitgeführt werden.

Um Fehlfunktionen der Toilette zu vermeiden und eine gleichmäßige Funktion sicher zu stellen, werden feinmaschige Filter in der Wasserzuleitung zur Toilette verbaut. Diese besitzen eine Maschenweite, die nur für das Installationssystem der Toiletteneinrichtung mit Leitungen, Ventilen und den Spüldüsen, unschädliche Partikel passieren lässt und die weiteren Fremdkörper zurück hält.

Die Filter müssen regelmäßig gereinigt oder gar ausgetauscht werden. Dazu sind die Filter entsprechend wartungsfreundlich im Leitungssystem anzuordnen, was stellenweise mit einem erheblichen konstruktiven Aufwand verbunden ist. Dennoch sinken die Zuverlässigkeit und damit die Verfügbarkeit der Toiletteneinrichtung mit steigendem Wartungsbedarf des Filters. Dieser ist wiederum in hohem Maße abhängig vom Zustand der landseitigen Versorgungseinrichtung oder dem Härtegrad des zugeführten Frischwassers.

Problematisch ist in vielen Fällen, dass die exakten Randbedingungen, insbesondere der landseitigen Infrastruktur, nicht bekannt sind oder von Füllstation zu Füllstation stark variieren. Daher können vielfach keine exakten Reinigungsintervalle für die Filter angegeben werden, wodurch die Intervalle zur präventiven Instandhaltung kurz ausgelegt werden, um auch unter schlechten Randbedingungen einen zuverlässigen Einsatz der Toiletteneinrichtung gewährleisten zu können.

Der Erfindung liegt die Aufgabe zugrunde, eine kostengünstig zu betreibende Toiletteneinrichtung für ein Schienenfahrzeug vorzuschlagen.

Gelöst wird die Aufgabe durch die Gegenstände der unabhängigen Patentansprüche. Weiterbildungen und Ausgestaltungen der Erfindung finden sich in den Merkmalen der abhängigen Patentansprüche wieder.

Eine erfindungsgemäße Toiletteneinrichtung für ein Fahrzeug umfasst spülwasserführende Installationen und abwasserführende Installationen. Die spülwasserführenden Installationen umfassen wenigstens einen Zwischenbehälter zur Speicherung von Spülwasser und wenigstens eine Versorgungsleitung. Die wenigstens eine Versorgungsleitung dient zur Zufuhr von Spülwasser zum Zwischenbehälter und ist mit dem wenigstens einen Zwischenbehälter verbunden. Zur Filterung von Spülwasser, welches dem Zwischenbehälter durch die Versorgungsleitung zugeführt wird, umfasst die Toiletteneinrichtung wenigstens ein Filter, welches insbesondere in der Versorgungsleitung angeordnet ist.

Zur Reinigung des wenigstens einen Filters ist die wenigstens eine Versorgungsleitung erfindungsgemäß so mit dem wenigstens einen Zwischenbehälter verbunden, dass Spülwasser aus dem Zwischenbehälter durch den Filter zurückführbar ist. Des Weiteren umfasst die Toiletteneinrichtung zur Reinigung des wenigstens einen Filters erfindungsgemäß eine Rückspülleitung, welche mit dem wenigstens einen Filter verbunden ist und welche in wenigstens eine der abwasserführenden Installation mündet.

Gelöst wird die Aufgabe auch durch ein Fahrzeug, insbesondere ein Schienenfahrzeug des öffentlichen Personenverkehrs, welches eine erfindungsgemäße Toiletteneinrichtung umfasst. Auch Loks können derartige Toiletteneinrichtungen aufweisen. Neben den genannten Schienenfahrzeugen kann dies auch ein Flugzeug, ein Bus oder ein Schiff oder Fähre sein. Nachfolgend wird stellvertretend nur auf ein Schienenfahrzeug Bezug genommen.

Das dem Zwischenbehälter zugeführte Spülwasser, auch Spülflüssigkeit genannt, ist insbesondere Trink- oder Frischwasser. Es kann sich aber auch um Grauwasser aus Handwaschbecken handeln oder es handelt sich beispielsweise um Trink- oder Frischwasser, welches mit Reinigungs- und/oder Desinfektionsmitteln versetzt ist. Auch im Zwischenbehälter selbst könnte ihm zugeführtes und gefiltertes Trink- oder Frischwasser mit Reinigungs- und/oder Desinfektionsmitteln versetzt werden. Dann weist er entsprechende Einrichtungen auf.

Die Versorgungsleitung dient dem Transport von Spülwasser von einer Versorgungseinrichtung zum Zwischenbehälter. Dazu ist sie mit dem Zwischenbehälter verbunden. Die Versorgungseinrichtung selbst kann vom Schienenfahrzeug selbst umfasst werden, beispielsweise handelt es sich um einen Frischwassertank. Zusätzlich oder alternativ handelt es sich bei der Versorgungseinrichtung jedoch um eine externe, nicht zum Fahrzeug gehörige Einrichtung, beispielsweise ein externer Tank oder ein Trinkwassernetz. Dann umfasst das Schienenfahrzeug beispielsweise einen Einfüllstutzen an einem Ende der Versorgungsleitung, um eine externe Versorgungseinrichtung anzuschließen. Das andere Ende der Versorgungsleitung mündet dann in den Zwischenbehälter.

Der Filter wird insbesondere von der Versorgungsleitung umfasst und ist in der Versorgungsleitung angeordnet. Es dient der Filterung von dem Zwischenbehälter zugeführten Spülwasser, insbesondere zur Filterung von Partikeln aus dem Spülwasser, welche größer als eine vorgegebene Mindestgröße sind und welche weitere Spülwasserleitungen oder Spüldüsen stromabwärts des Filters und/oder des Zwischenbehälters verstopfen könnten. Der Filter ist entsprechend geeignet ausgestaltet, beispielsweise ist es als Sieb ausgebildet.

Der Filter ist bei der Befüllung des Zwischenbehälters mit Spülwasser aus der Versorgungseinrichtung stromabwärts zwischen der Versorgungseinrichtung, beispielsweise einem Frischwassertank, und dem Zwischenbehälter angeordnet. Es kann unmittelbar an den Zwischenbehälter anschließen - dann verlaufen die weiteren Abschnitte der Versorgungsleitung ausschließlich zwischen Filter und Versorgungseinrichtung - oder wenigstens ein Abschnitt der Versorgungsleitung verläuft zwischen dem Filter und dem Zwischenbehälter und wenigstens ein weiterer Abschnitt der Versorgungsleitung verläuft zwischen der Versorgungseinrichtung und dem Filter.

Zur Reinigung des Filters wird Spülwasser aus dem Zwischenbehälter durch den Filter zurückgeführt und dadurch die im Filter zurückgehaltenen Partikel wieder aus dem Filter gelöst und durch die Rückspülleitung in wenigstens eine der abwasserführenden Installationen geführt. Die Rückspülleitung ist dazu mit wenigstens einer der abwasserführenden Installationen so verbunden, so dass das aus dem Zwischenbehälter durch den Filter zurückgeführte Spülwasser in die abwasserführenden Installationen geführt wird. Dabei kann das durch den Filter zurückgeführte Spülwasser durch wenigstens einen Abschnitt der Versorgungsleitung geführt werden. Dies ist insbesondere dann der Fall, wenn die Rückspülleitung unmittelbar mit der Versorgungsleitung zwischen der Versorgungseinrichtung und dem Filter in Verbindung steht. Alternativ ist die Rückspülleitung mit dem wenigstens einem Filter unmittelbar verbunden.

Die Rückspülleitung dient dazu, das bei einer Rückspülung aus dem Zwischenbehälter durch den Filter zurückfließende Spülwasser in wenigstens eine der abwasserführenden Installationen zu leiten, insbesondere mündet sie in wenigstens eine abwasserführende Installation. Weitergebildet umfassen die abwasserführenden Installationen wenigstens ein mit Spülwasser spülbares Becken, in welches die Rückspülleitung mündet. Die Rückspielleitung ist mit dem spülbaren Becken so verbunden, dass das aus dem Zwischenbehälter durch den Filter zurückgeführte Spülwasser in das Becken geführt wird. Alternativ kann die Rückspülleitung auch in ein anderes geeignetes Umfeld münden, beispielsweise auf das Gleisbett.

Bei der Befüllung des Zwischenbehälters wird letzterer zumindest teilweise mit Spülwasser befüllt. Bei einer Rückspülung hingegen wird der Zwischenbehälter zumindest teilweise entleert. Eine weitere, zumindest teilweise Entleerung des Zwischenbehälters erfolgt bei einer Spülung. Dann wird Wasser durch wenigstens eine Spülwasserleitung, welche zwischen dem Zwischenbehälter und dem Becken verläuft, aus dem Zwischenbehälter zum spülbaren Becken geführt. Die Spülwasserleitung kann dabei unmittelbar mit dem Zwischenbehälter und/oder dem Becken verbunden sein.

Das spülbare Becken umfasst gemäß einer Ausführungsform Spüldüsen zum Spülen des spülbaren Beckens bei einer Spülung, welche Spüldüsen mit der Spülwasserleitung hydraulisch verbunden sind und in welche die Spülwasserleitung mündet. Daneben kann das spülbare Becken weitere, von den Spüldüsen verschiedene Rückspülöffnungen umfassen, welche hydraulisch mit der Rückspülleitung verbunden sind und in welche die Rückspülleitung mündet, um das Spülwasser bei einer Rückspülung aus der Rückspülleitung in das Becken abzuführen. Ausreichend ist wenigstens eine Rückspülöffnung. Sie bildet den Ausgang der Rückspülleitung und dient somit der Filtrateinleitung in das Spülbecken. Die wenigstens eine Rückspülöffnung könnte auch als Rückspüldüse bezeichnet werden, ist jedoch nicht zwingend als Düse ausgebildet. Die Spüldüsen können jeweils einen geringeren Querschnitt aufweisen als die Rückspülöffnung.

Gemäß einer weiteren Weiterbildung der Erfindung umfassen die spülwasserführenden Installationen somit wenigstens eine Spülwasserleitung und wenigstens ein Auslassventil in der wenigstens einen Spülwasserleitung. Die Spülwasserleitung dient bei der Spülung der Abfuhr von Spülwasser aus dem Zwischenbehälter und der Zufuhr dieses Spülwassers zum spülbaren Becken. Die Spülwasserleitung dient analog zur Versorgungs- und/oder zur Rückspülleitung dem Transport von Spülwasser. Das wenigstens eine Auslassventil dient zur Steuerung des Flusses an Spülwasser durch die Spülwasserleitung. Es kann den Abfluss an Spülwasser aus dem Zwischenbehälter frei geben, begrenzen und/oder unterbrechen.

Ein Ventil ist ein Absperrorgan zur Absperrung oder Regelung des Durchflusses von Fluiden, also Flüssigkeiten und Gasen. Ein Ventil ist isoliert gesehen als Steuerglied zu bezeichnen - und dient somit der Steuerung des Flusses von Fluid. Es ist zumindest zwischen zwei Stellungen schaltbar: einem offenen und einem geschlossenen Zustand. Darüber hinaus kann das Ventil auch einen teilweise geöffneten Zustand einnehmen, um den Fluss zu begrenzen, jedoch nicht zu unterbrechen. Wird das Ventil mit einem Regler in einem integrierten System betrachtet, dient das Ventil zur Regelung des Flusses von Spülwasser durch das Ventil und damit durch die an das Ventil unmittelbar angrenzenden Installationen.

Weitergebildet umfasst die Toiletteneinrichtung wenigstens ein Einlassventil in der wenigstens einen Versorgungsleitung, welches z.B. zwischen dem Filter und dem Zwischenbehälter in der Versorgungsleitung angeordnet ist. Das Einlassventil dient zur Steuerung des Flusses an Spülwasser durch die Versorgungsleitung, insbesondere zur Steuerung des Zuflusses an Spülwasser zum Zwischenbehälter hin, sowie zur Steuerung des Rückfluss an Spülwasser aus dem Zwischenbehälter zurück zumindest durch den Filter als Teil der Versorgungsleitung. Es kann, insbesondere bei der Befüllung des Zwischenbehälters, den Zufluss an Spülwasser zum Zwischenbehälter frei geben, begrenzen und/oder unterbrechen. Gleichermaßen kann es, insbesondere bei der Rückspülung, den Rückfluss an Spülwasser wenigstens durch den entsprechenden Abschnitt der Versorgungsleitung mit dem Einlassventil und damit den Rückfluss an Spülwasser durch den Filter frei geben, begrenzen und/oder unterbrechen.

Eine weitere Weiterbildung der Erfindung ist darin zu sehen, dass die Toiletteneinrichtung wenigstens eine Vorrichtung zur Druckbeaufschlagung des Spülwassers im Zwischenbehälter umfasst, insbesondere um Spülwasser aus dem Zwischenbehälter unter Druck durch die Spülwasserleitung zum spülbaren Becken zu befördern und/oder um Spülwasser aus dem Zwischenbehälter unter Druck wenigstens durch den Filter zur Rückspülleitung zu befördern. Gegebenenfalls wird das Spülwasser noch unter Druck durch die Rückspülleitung zum spülbaren Becken befördert.

Der Zwischenbehälter kann unmittelbar an eine solche Vorrichtung zur Druckbeaufschlagung, insbesondere eine Drucklufteinrichtung angeschlossen sein. Fahrzeuge wie z.B. Schienenfahrzeuge oder Reisebusse verfügen meist über eine zentrale Druckluftversorgung mit druckluftführenden Druckluftinstallation und entsprechenden Anschlüssen zum Anschluss von Verbrauchern. Der Zwischenbehälter ist geeignet anschließbar ausgebildet. Die Toiletteneinrichtung kann ein Druckluftventil zwischen der Druckluftinstallation des Schienenfahrzeugs und dem Zwischenbehälter umfassen, um die Druckbeaufschlagung des Spülwassers im Zwischenbehälter zu regeln. Das Druckluftventil dient dazu, die Zufuhr an Druckluft in den Zwischenbehälter frei zu geben, zu begrenzen und/oder zu unterbrechen.

Die Vorrichtung zur Druckbeaufschlagung ist geeignet und entsprechend ausgebildet, einen Überdruck gegenüber dem Luftdruck der unmittelbaren Umgebung des Zwischenbehälters im Zwischenbehälter herzustellen.

Alternativ kann im Zwischenbehälter auch durch eine Federmembran oder eine andere geeignete Vorrichtung ein Überdruck gegenüber der Umgebung erzeugt werden.

Bei der Toiletteneinrichtung handelt es sich insbesondere um eine Vakuum-Toiletteneinrichtung.

Gemäß einer weiteren Weiterbildung der Erfindung ist vorgesehen, dass die Rückspülleitung ein Überdruckventil zum Verschließen der Rückspülleitung umfasst, sobald der Druck des Spülwassers unter einen vorgegebenen Schwellwert sinkt. Analog wird die Rückspülleitung durch das Überdruckventil wieder frei gegeben, wenn der Druck des Spülwassers den vorgegebenen Schwellwert erreicht und/oder diesen übersteigt. Das Überdruckventil ist dazu insbesondere derart ausgebildet und in der Rückspülleitung angeordnet, dass es die Rückspülleitung bei einem Wert des Drucks des Spülwassers öffnet, welcher gleich groß oder höher ist als der vorgegebener Schwellwert und welches die Rückspülleitung verschließt, bei einem Wert des Drucks des Spülwassers, welcher niedriger ist als der vorgegebene Schwellwert.

Insbesondere durch die Vorrichtung zur Druckbeaufschlagung des Spülwassers im Zwischenbehälter ist der Druck des zurückfließenden Spülwassers aus dem Zwischenbehälter bei der Rückspülung signifikant höher als der Druck des dem Zwischenbehälter zugeführten Spülwassers bei der Befüllung. Das Überdruckventil ist so ausgebildet, dass es einen Fluss an Spülwasser durch die Rückspülleitung bei der Befüllung des Zwischenbehälters blockiert und somit einen Wasserverlust durch die Rückspülleitung verhindert und gleichzeitig sicherstellt, dass das Spülwasser aus der Versorgungseinrichtung dem Zwischenbehälter im Wesentlichen vollständig zugeführt wird, und Spülwasser durch die Rückspülleitung bei der Rückspülung passieren lässt. Der Schwellwert ist insbesondere abhängig vom Druck des Spülwassers im Zwischenbehälter. Dieser liegt beispielsweise 0,3 bar über dem Umgebungs-/Atmosphärendruck.

Eine weitere Weiterbildung der Toiletteneinrichtung umfasst ein Rückschlagventil, welches in der Versorgungsleitung angeordnet ist, um einen Rückfluss an Spülwasser vom Filter zu einer dem Zwischenbehälter gegenüberliegenden Mündung der Versorgungsleitung, also vom Filter weg in Richtung zur Versorgungseinrichtung, z.B. zu einem Frischwassertank, zu unterbinden. Dazu verschließt das Rückschlagventil die Versorgungsleitung für den Rückfluss an Spülwasser vom Filter zu der dem Zwischenbehälter gegenüberliegenden Mündung der Versorgungsleitung. Zum Befüllen des Zwischenbehälters hingegen lässt das Rückschlagventil das zum Zwischenbehälter fließende Spülwasser passieren.

Gemäß einer weiteren Weiterbildung ist der Filter als Y-förmiges Rohrstück ausgebildet und umfasst einen ringförmigen Filtereinsatz. Die Basis des Y-förmigen Rohrstücks kann dabei mit dem Zwischenbehälter verbunden sein, wobei die beiden Scheitel des Y-förmigen Rohrstücks mit der Rückspülleitung einerseits und andererseits mit dem Teil der Versorgungsleitung verbunden sind, welcher Spülwasser zwischen der Versorgungseinrichtung und dem Filter führt. Eine alternative Ausgestaltung ist denkbar. Der Filtereinsatz ist so im Y-förmigen Rohrstück angeordnet, dass er Partikel aus dem Spülwasser, welches beim Befüllen des Zwischenbehälters dem Zwischenbehälter zugeführt wird und dabei durch den Filter fließt, herausfiltert und, dass Spülwasser in umgekehrter Richtung die herausgefilterten Partikel aus dem Filter lösen kann, wobei das Wasser in die Rückspülleitung ableitbar ist bzw. abgeleitet wird.

Ein Verfahren zum Betreiben einer erfindungsgemäßen Toiletteneinrichtung sieht folgende Verfahrensschritte vor:
a) Befüllen des Zwischenbehälters mit Spülwasser, wobei das dem Zwischenbehälter zugeführte Spülwassers durch einen Filter geführt und dabei gefiltert wird;
b) Spülen eines spülbaren Beckens mit Spülwasser aus dem Zwischenbehälter oder
c) Rückspülen des Filters mit Spülwasser aus dem Zwischenbehälter und Ableiten des Spülwassers in eine abwasserführende Installation.

Eine zeitliche Abfolge der einzelnen Verfahrensschritte soll hierdurch nicht zwingend festgelegt sein. So können beispielsweise die Verfahrensschritte b) Spülen und c) Rückspülen auch gleichzeitig erfolgen.

Beim Befüllen des Zwischenbehälters wird das dem Zwischenbehälter zuzuführende Spülwasser über eine Versorgungsleitung mit einem Filter, durch den Filter zum Zwischenbehälter geführt. Dabei wird das dem Zwischenbehälter zuzuführende Spülwasser durch den Filter gefiltert.

Zur Filterung von Spülwasser, welches dem Zwischenbehälter während seiner Befüllung über die Versorgungsleitung und über den Filter zugeführt wird, ist der Filter bei der Befüllung dem Zwischenbehälter strömungstechnisch vorgeschaltet.

Sowohl bei der Befüllung wird Spülwasser durch den Filter geleitet, sowie auch bei der Rückspülung - jedoch in unterschiedlichen Strömungsrichtungen. Bei einer Spülung wird der Zwischenbehälter analog zur Rückspülung ebenfalls zumindest teilweise entleert, aber das Spülwasser nicht durch den Filter, sondern durch die Spülwasserleitung, beispielsweise in das spülbare Becken geführt. Die Spülung des spülbaren Beckens mit Spülwasser aus dem Zwischenbehälter erfolgt insbesondere in Abhängigkeit einer Auslösung durch einen Benutzer, beispielsweise durch Betätigen eines Spültasters oder auf Anforderung durch einen berührungslos betätigten Sensors. Die Strömungsrichtung des Spülwassers durch den Filter bei der Befüllung des Zwischenbehälters könnte als Filterrichtung bezeichnet werden und die entgegengesetzte Strömungsrichtung, in welcher das Spülwasser aus dem Zwischenbehälter durch den Filter bei der Rückspülung fließt, könnte analog als Rückspülrichtung bezeichnet werden.

Eine Weiterbildung des erfindungsgemäßen Verfahrens sieht vor, dass die Toiletteneinrichtung ein Einlassventil in der Versorgungsleitung zumindest zur Regelung der Zufuhr von Spülwasser zum Zwischenbehälter umfasst, wobei das Einlassventil zur Ausführung des Verfahrensschritts a) zumindest teilweise geöffnet ist oder vor der Ausführung des Verfahrensschritts a) zumindest teilweise geöffnet wird und wobei das Einlassventil zur Ausführung des Verfahrensschritts b) zumindest teilweise geschlossen ist oder vor der Ausführung des Verfahrensschritts b) zumindest teilweise geschlossen wird und wobei das Einlassventil zur Ausführung des Verfahrensschritts a) zumindest teilweise geöffnet ist oder vor der Ausführung des Verfahrensschritts c) zumindest teilweise geöffnet wird.

Das Einlassventil ist insbesondere in der Versorgungsleitung zwischen dem Filter und dem Zwischenbehälter angeordnet.

In der Regel wird das Einlassventil vor dem Verfahrensschritt a) geöffnet und nach Abschluss des Verfahrensschritts a), insbesondere bei Erreichen eines vorgegebenen Sollpegels an Spülwasser im Zwischenbehälter, wieder geschlossen, so dass es zur Ausführung des Verfahrensschritts b) geschlossen bleibt und zur Ausführung des Verfahrensschritts c) wieder geöffnet wird, wobei es nach Abschluss des Verfahrensschritts c) wiederum geschlossen wird.

Gemäß einer weiteren Weiterbildung umfasst die Toiletteneinrichtung eine Spülwasserleitung zur Abfuhr von Spülwasser aus dem Zwischenbehälter zu einem spülbaren Becken und ein Auslassventil in der Spülwasserleitung zur Regelung der Abfuhr von Spülwasser aus dem Zwischenbehälter zu dem spülbaren Becken, wobei das Auslassventil zur Ausführung des Verfahrensschritts a) zumindest teilweise geschlossen ist oder vor der Ausführung des Verfahrensschritts a) zumindest teilweise geschlossen wird und wobei das Auslassventil zur Ausführung des Verfahrensschritts b) zumindest teilweise geöffnet ist oder vor der Ausführung des Verfahrensschritts b) zumindest teilweise geöffnet wird und wobei das Auslassventil zur Ausführung des Verfahrensschritts c) zumindest teilweise geschlossen ist oder vor der Ausführung des Verfahrensschritts c) zumindest teilweise geschlossen wird.

Auch hier wird das Auslassventil in der Regel nach jeder erfolgten Spülung, also nach Abschluss der Ausführung von Verfahrensschritt b), geschlossen. Es bleibt damit zur Ausführung der Verfahrensschritte a) und c) geschlossen und wird nur zur Ausführung des Verfahrensschritts b) geöffnet.

In einer weiteren Ausführungsform der Erfindung ist vorgesehen, dass die Toiletteneinrichtung in der Versorgungsleitung ein Rückschlagventil zum Verschließen der Versorgungsleitung für einen Fluss an Spülwasser vom Filter zu einer dem Zwischenbehälter gegenüberliegenden Mündung der Versorgungsleitung, beispielsweise einem Frischwassertank, umfasst, wobei das Rückschlagventil bei der Ausführung des Verfahrensschritts a) zumindest teilweise geöffnet ist und wobei das Rückschlagventil bei der Ausführung des Verfahrensschritts b) geschlossen ist und wobei das Rückschlagventil bei der Ausführung des Verfahrensschritts c) geschlossen ist. Eine aktive Betätigung des Rückschlagventils von außen ist nicht erforderlich. Das Rückschlagventil wird durch den Druck des Spülwassers betätigt.

Wobei die Toiletteneinrichtung in der Rückspülleitung ein Überdruckventil zum Verschließen der Rückspülleitung umfasst, wobei das Überdruckventil bei der Ausführung des Verfahrensschritts a) geschlossen ist und wobei das Überdruckventil bei der Ausführung des Verfahrensschritts c) zumindest teilweise geöffnet ist. Die Stellung des Überdruckventils ist bei der Ausführung des Verfahrensschritts b) in der Regel unerheblich, da kein Druck an Spülwasser am Überdruckventil anliegt. Sollte dies doch der Fall sein, ist das Überdruckventil bei der Ausführung des Verfahrensschritts b) zumindest teilweise geöffnet. Auch das Überdruckventil wird nicht aktiv von außen betätigt. Es wird durch das Spülwasser geöffnet. Bei einem zu geringen Druck in der Rückspülleitung, insbesondere bei einem zu geringen Druck des Spülwassers in der Rückspülleitung ist das Überdruckventil geschlossen.

Alternativ kann an Stelle des Überdruckventils in der Rückspülleitung auch ein aktiv angesteuertes Ventil eingesetzt werden.

Zum Herstellen eines Überdrucks wird die Spülwassers im Zwischenbehälter vor der Ausführung der Verfahrensschritte b) oder c) mit einem Überdruck beaufschlagt wird, insbesondere mittels einer Vorrichtung zur Druckbeaufschlagung des Spülwassers im Zwischenbehälter.

Die Rückspülung und damit die Ausführung des Verfahrensschritts c) wird weitergebildet in Abhängigkeit von einer in Verfahrensschritt a) erfassten Durchflussmenge an Spülwasser durch den Filter oder in Abhängigkeit von einem in Verfahrensschritt a) erfassten Druckunterschied in der Versorgungsleitung vor und nach dem Filter oder in Abhängigkeit von einer erfassten Zeit zur Befüllung des Zwischenbehälters mit einer vorgegebenen Menge an Spülwasser ausgeführt.

Alternativ kann sie auch manuell ausgelöst werden oder nach einer vorgegebenen Anzahl an Spülzyklen oder nach Verstreichen einer vorgegebenen Zeitspanne.

Die vorgegebene Menge an Spülwasser ist insbesondere die Menge an Spülwasser zwischen einem erfassten Ausgangspegel vor der Befüllung und einem vorgegebenem Sollpegel an Spülwasser.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt eine Prinzipdarstellung einer Toiletteneinrichtung nach Stand der Technik,
- Fig. 2: zeigt eine Prinzipdarstellung einer erfindungsgemäßen Toiletteneinrichtung,
- Fig. 3: zeigt einen erfindungsgemäßen Filter im Schnitt, mit Spülwasser durch den Filter in Filterrichtung fließend,
- Fig. 4: zeigt den erfindungsgemäßen Filter aus Fig. 3 im Schnitt, mit Spülwasser durch den Filter in Reinigungsrichtung fließend,
- Fig. 5: zeigt eine weitere Ausführungsform eines erfindungsgemäßen Filters im Schnitt, mit Spülwasser durch den Filter in Filterrichtung fließend,
- Fig. 6: zeigt den erfindungsgemäßen Filter aus Fig. 5 im Schnitt, mit Spülwasser durch den Filter in Reinigungsrichtung fließend.

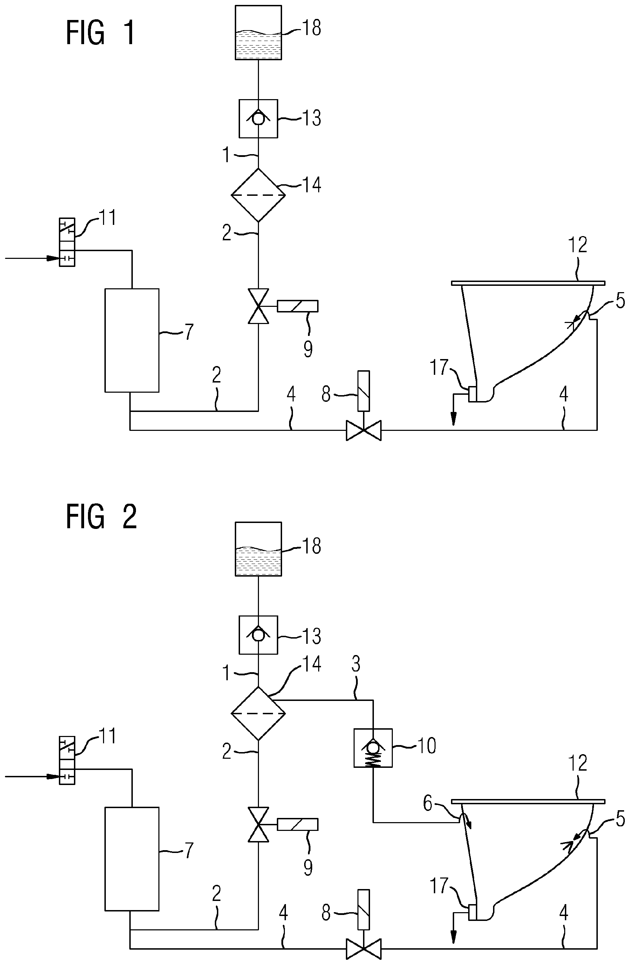

In Fig. 1 ist eine Toiletteneinrichtung nach Stand der Technik schematisch dargestellt. Sie umfasst einen Zwischenbehälter 7, welcher über eine Spülwasserleitung 4 und ein Auslassventil 8 in der Spülwasserleitung 4 mit einem Spülbaren Becken 12 hydraulisch verbunden ist. Das aus dem Zwischenbehälter 7 stammende und durch die Spülwasserleitung 4 transportierte Spülwasser wird durch Spüldüsen 5 in das spülbare Becken 12 ausgestoßen.

Zum Auffüllen des Zwischenbehälters 7 umfasst die Toiletteneinrichtung eine Versorgungsleitung 1, 2, welche einerseits im Zwischenbehälter 7 mündet und andererseits an einen Frischwassertank 18 als Versorgungseinrichtung angeschlossen ist. Die Versorgungsleitung 1, 2 wird hier durch einen Filter 14 unterteilt. Ein erster Abschnitt der Versorgungsleitung 1 ist somit zwischen dem Frischwassertank 18 und dem Filter 14 angeordnet, ein zweiter Abschnitt der Versorgungsleitung 2 verläuft zwischen dem Filter 14 und dem Zwischenbehälter 7. Der Filter 14 selbst könnte als dritter Abschnitt der Versorgungsleitung bezeichnet werden. Ein Rückschlagventil 13 verhindert den Rückfluss von Spülwasser durch den ersten Abschnitt der Versorgungsleitung 1 vom Filter 14 zum Frischwassertank 18.

Der Zwischenbehälter 7 ist an eine Vorrichtung zur Druckbeaufschlagung des Spülwassers im Zwischenbehälter 7 angeschlossen, hier ist der Zwischenbehälter 7 via ein Druckluftventil 11 an eine Druckluftinstallation angeschlossen. Dann kann auch ein Einlassventil 9 im zweiten Abschnitt der Versorgungsleitung 2 vorgesehen sein, zum Halten des Drucks im Zwischenbehälter. Alternativ kann der Druck im Zwischenbehälter 7 auch mittels Federkraft und Membran erzeugt werden.

Bei der skizzierten Toiletteneinrichtung wird das Becken 12 mit Spülwasser aus dem Zwischenbehälter 7 gespült, welches unter Einwirkung des im Zwischenbehälter aufgebauten Druckes zu einer oder mehrerer Spüldüsen 5 gepresst wird.

Der Zwischenbehälter 7 wird, gegebenenfalls nach dem Öffnen des Einlassventils, mit Spülwasser aus dem Frischwassertank 18 durch das Rückschlagventil 13, den Filter 14 und durch die Versorgungsleitung 1, 2 befüllt. Bei Erreichen eines Sollpegels wird die Befüllung beendet und gegebenenfalls das Einlassventil wieder geschlossen.

Zum Spülen des Beckens 12 wird das Auslassventil 8 geöffnet, vorher wird gegebenenfalls das Druckventil 11 geöffnet, um die Spülflüssigkeit im Zwischenbehälter mit einem Überdruck zu beaufschlagen, und das Spülwasser fließt durch die Spülwasserleitung 4 und durch die Spüldüsen 5 in das Becken 12. Abschließend wird der Inhalt des Beckens über eine Abwasserleitung 17 entleert.

Das in Fig. 2 schematisch veranschaulichte Ausgestaltungsbeispiel einer erfindungsgemäßen Toiletteneinrichtung umfasst wenigstens ein mit Spülwasser spülbares Becken 12, wenigstens ein Zwischenbehälter 7 zur Speicherung von Spülwasser, wenigstens eine Spülwasserleitung 4 zwischen dem Zwischenbehälter 7 und dem spülbaren Becken 12, wenigstens eine Vorrichtung zur Erzeugung des Spüldruckes in der Spülleitung 4, wenigstens ein Auslassventil 8 in der wenigstens einen Spülwasserleitung 4, wenigstens eine Versorgungsleitung 1, 2 zur Zufuhr von Spülwasser zum Zwischenbehälter 7 und wenigstens ein Filter 14 in der Versorgungsleitung 1, 2 zur Filterung des dem Zwischenbehälter 7 durch die Versorgungsleitung 1, 2 und durch den Filter 14 zugeführten Spülwassers sowie einer Rückspülleitung 3.

Die Spülwasserleitung 4 dient primär zur Führung von Spülwasser aus dem Zwischenbehälter 7 zum spülbaren Becken 12. Das Auslassventil ist ebenfalls zwischen dem Zwischenbehälter 7 und dem spülbaren Becken 12 angeordnet und dient der Steuerung des Durchflusses an Spülwasser durch die Spülwassersleitung 4 vom Zwischenbehälter 7 zum spülbaren Becken 12.

Die Versorgungsleitung 1, 2 verläuft hier zwischen einem Frischwassertank 18 als Versorgungseinrichtung des Schienenfahrzeugs und dem Zwischenbehälter 7. Dabei ist wiederum ein erster Abschnitt der Versorgungsleitung 1 zwischen dem Frischwassertank 18 und dem Filter 14 angeordnet und ein zweiter Abschnitt der Versorgungsleitung 2 verläuft zwischen dem Filter 14 und dem Zwischenbehälter 7.

Als Vorrichtung zur Druckbeaufschlagung dient hier ein Druckluftventil 11 über welches der Zwischenbehälter 7 mit einer nicht gezeichneten Druckluftinstallation, welche Druckluft führt, angeschlossen ist. Alternativ kann der Druck auch durch eine federbelastete Membran oder eine andere geeignete Pumpeinrichtung erzeugt werden.

Die Versorgungsleitung 1, 2, hier der zweite Abschnitt der Versorgungsleitung 2, ist so an den Zwischenbehälter 7 angeschlossen, dass Spülwasser aus dem Zwischenbehälter 7 durch den Filter 14 zurückführbar ist. Hier mündet der zweite Abschnitt der Versorgungsleitung 2 im unteren Teil des Zwischenbehälters 7.

Die Spülwasserleitung 4 und die Versorgungsleitung 1, 2 sind hier gemeinsam mit dem Zwischenbehälter 7 verbunden. Alternativ sind die genannten Leitungen separat voneinander vom Zwischenbehälter 7 angeschlossen.

Neben dem Auslassventil 8 in der Spülwasserleitung 4 zur Steuerung des Durchflusses an Spülwasser durch die Spülwasserleitung 4 umfasst die Toiletteneinrichtung hier auch ein Einlassventil 9 in der Versorgungsleitung 2 zur Steuerung des Durchflusses an Spülwasser durch die Versorgungsleitung 2. Das Einlassventil 9 ist hier zwischen dem Filter 14 und dem Zwischenbehälter 7 im zweiten Abschnitt der Versorgungsleitung 2 angeordnet.

Zur Reinigung des Filters wird das Einlassventil 9 geöffnet und das unter Druck stehende Spülwasser fließt aus dem Spülwasserbehälter 7 durch den zweiten Abschnitt der Versorgungsleitung 2 zum Filter 14 und entgegen der Filterrichtung durch einen Filtereinsatz.

Darüber hinaus weist die Toiletteneinrichtung wenigstens eine Rückspülleitung 3 auf. Sie dient zum Transport von dem aus dem Zwischenbehälter 7 durch den Filter 14 zurückfließendem Spülwasser in eine abwasserführende Installation, hier in das spülbare Becken 12 und damit dem Abtransport des aus dem Filter rückgespülten Filtrats.

Hier ist die Rückspülleitung 3 einerseits mit dem spülbaren Becken 12 und andererseits mit dem Filter 14 unmittelbar verbunden. Die Verbindung des Filters 14 mit der Rückspülleitung 3 ist hydraulisch zu sehen und nicht zwingend unmittelbar. Alternativ kann die Rückspülleitung 3 auch mit der Versorgungsleitung 1, 2, insbesondere dem beim Rückfluss stromabwärts liegenden ersten Abschnitt der Versorgungsleitung 1, verbunden sein. Dann ist eine Verzweigung und gegebenenfalls eine steuerbare oder automatische Weiche oder ein Ventil in der Versorgungsleitung 1 vorgesehen, um den Rückfluss an Spülwasser durch die Rückspülleitung 3 zu leiten. Sobald das Spülwasser die Spüldüsen 5 verlässt, gilt es als Abwasser. Somit zählt das spülbare Becken 12 zu den abwasserführenden Installationen. Als Beispiele für abwasserführende Installationen sind neben dem Becken 12 auch Abwasserrohre oder ein Abwassertank zu nennen, in welche die Rückspülleitung 3 unmittelbar münden kann. Da die Rückspülleitung selbst das durch die aus dem Filter 14 gelösten Partikel oder Fremdkörper belastete Spülwasser führt, könnte die Rückspülleitung 3 auch zu den abwasserführenden Installationen gezählt werden.

Bei geöffnetem Einlassventil 9 ist die Versorgungsleitung 1, 2 zwischen dem Frischwassertank 18 und dem Zwischenbehälter 7 frei und der Zwischenbehälter 7 somit befüllbar. Gleichermaßen ist die Versorgungsleitung 1, 2 so mit dem Zwischenbehälter 7 verbunden, dass bei geöffnetem Einlassventil 9 Spülwasser aus dem Zwischenbehälter 7 durch den Filter 14 zurückfließen kann. Sowohl zur Befüllung des Zwischenbehälters 7, als auch zur Reinigung des Filters 14 ist das Einlassventil 9 zu öffnen. Zum Spülen des Beckens 12 hingegen und um unnötige Wasserverluste zu vermeiden, ist das Einlassventil 9 ansonsten geschlossen zu halten.

Damit beim Befüllen des Zwischenbehälters 7 kein Spülwasser durch die Rückspülleitung 3 abgeführt wird, umfasst diese hier ein Überdruckventil 10, welches nur unter einem vorgegebenen Druck stehendes Spülwasser passieren lässt. Die technischen Anforderungen an das Überdruckventil 10 sind gering. Es kann auf maximale Schmutzresistenz ausgelegt werden, da für diesen Leitungszweig keine Wassersparzwänge bestehen. Das Überdruckventil 10 stellt sicher, dass nur oberhalb eines Mindestdruckes eine Rückspülung ausgeführt wird.

Die Zeit für die Befüllung des Zwischenbehälters 7 kann überwacht werden, um bei einer signifikanten Verlängerung auf eine zumindest teilweise Verstopfung des Filters 14 mit Filtereinsatz zu schließen. Zur Vermeidung des Funktionsausfalls der gesamten Toiletteneinrichtung wird dann der Filter 14 mit Filtereinsatz rückwärts gespült.

Zum Rückwärtsspülen des Filters 14 mit Filtereinsatz wird im zumindest teilweise mit Spülwasser gefüllten Zwischenbehälter 7, wie beim normalen Spülen, durch Öffnen des Druckventils 11 der Druck erhöht, insbesondere ein vorgegebener Rückspüldruck eingestellt. Entgegen dem normalen Spülen bleibt das Auslassventil 8 jedoch geschlossen. Stattdessen wird das Einlassventil 9 geöffnet. Spülwasser aus dem Zwischenbehälter 7 fließt nun entgegen der Filterrichtung des Filters 14 durch den Filter 14 und den Filtereinsatz. Da das Rückschlagventil 13 geschlossen ist, wird der Inhalt des Filters 14 und des Filtereinsatzes ausgeschwemmt und durch die Rückspülleitung 3 zur Rückspülöffnung 6 und von dort in das Becken 12 geleitet. Nach dem Öffnen des Auslassventils 8 zum vollständigen Druckausgleich wird eine normale Spülung des Beckens initiiert und der Inhalt des Beckens 12 in das Abwassersystem 17 entsorgt.

Der Rückspülvorgang kann kontinuierlich und mit dem vollständigen Volumen des Zwischenbehälters 7 in einem Durchgang oder dynamisch durch zyklisches Öffnen und Schließen des Einlassventils erfolgen. Beim dynamischen Spülen beeinflussen die Druckschwankungen währende des pulsierenden Rückspülvorgangs die Rückspülleistung.

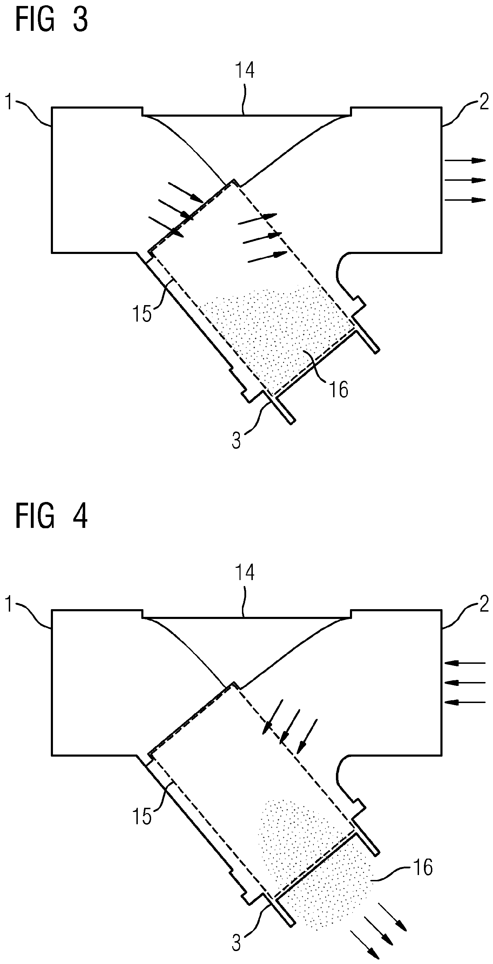

Entsprechend der Prinzipdarstellungen der Fig. 3 und der Fig. 4 wird der Filter 14 mit Filtereinsatz in der Versorgungsleitung 1, 2 mit einem zusätzlichen Abgang versehen. Durch diesen Abgang kann der Inhalt 16 des Filtereinsatzes 15 durch die Rückspülleitung 3 in das Becken geleitet werden. Pfeile in Fig. 3 zeigt dabei die Fließrichtung des Spülwassers bei einer Befüllung des Zwischenbehälters an. In Fig. 4 ist hingegen die Fließrichtung des Spülwassers bei einer Rückspülung angedeutet.

Der Filtereinsatz 15 wird automatisch und regelmäßig gereinigt. Dabei wird ein mindestens Großteil des Filtrats 16 unschädlich entsorgt. Wenigstens grobe und volumenreiche Verunreinigungen werden aus dem Filtereinsatz 15 entfernt. Auch feine Verunreinigungen werden verringert. Dadurch wird die Standzeit der Toiletteneinrichtung erheblich verlängert und die Wartungskosten verringert. Ausfälle werden vermieden. Das Filtrat 16 wird im Schwarzwasserbereich entsorgt. Es sind keine manuellen Aktionen notwendig. Durch die Verwendung eines Filters 14 mit geringem Platzbedarf kann eine Sanitärzelle eines Schienenfahrzeugs die gesamte Toiletteneinrichtung inklusive vollständigen Rückspülinstallationen beherbergen. Es sind keine weiteren Anbauteile oder Verrohrungen außerhalb der Sanitärzelle notwendig.

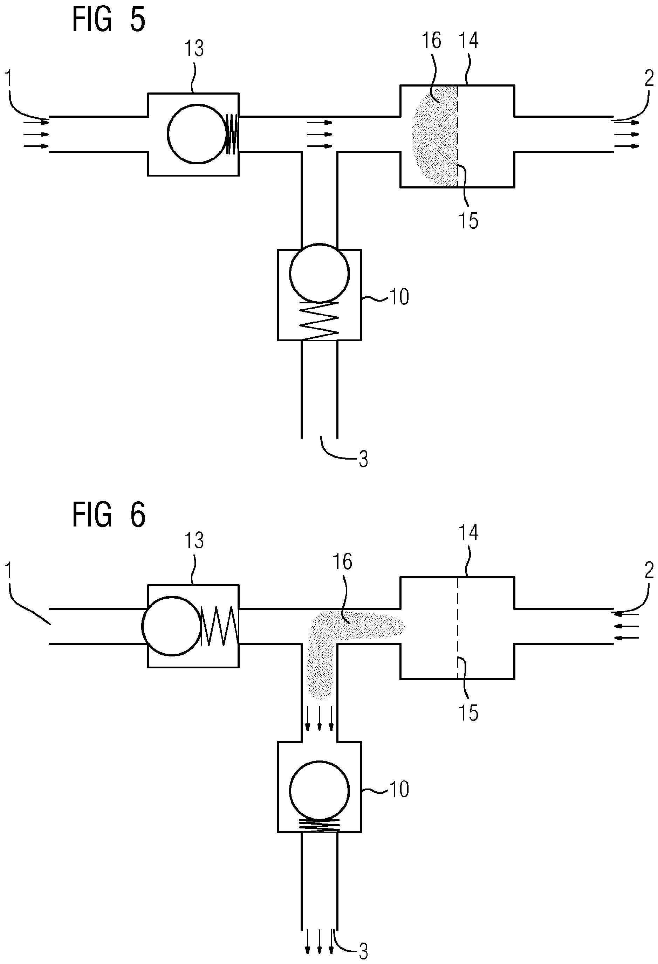

Fig. 5 und Fig. 6 zeigen eine zur Ausbildung gemäß Fig. 3 und Fig. 4 alternative Ausgestaltung des Filters 14 und eine veränderte Anschlusskonfiguration. Der Filter 14 ist hier als Rohrstück ohne Abzweigung ausgebildet. Er umfasst wiederum einen Filtereinsatz 15, welcher in einer vorgesehenen Fließrichtung des Spülwassers bei einer Befüllung des Zwischenbehälters Partikel aus dem Frischwasser herausfiltert, welche sich im Filtereinsatz 15 ansammeln. Der Filtereinsatz 15 ist entsprechend in den Filter eingesetzt.

Fig. 5 veranschaulicht diesen Befüllvorgang. Frischwasser strömt aus Richtung der Versorgungseinrichtung durch die Versorgungsleitung 1 und das in Strömungsrichtung geöffnete Rückschlagventil 13, um weiter stromabwärts das Filter 14 mit seinem Filtereinsatz 15 in Filterrichtung zu passieren. Der Druck ist nicht ausreichend, um ein Rückschlagventil 10 zu öffnen, welches eine Rückspülleitung 3 verschließt, welche ihrerseits unmittelbar an die Versorgungsleitung 2 zwischen dem Rückschlagventil 10 und dem Filter 14 angeschlossen ist. Das gefilterte Frischwasser wird durch die Versorgungsleitung 2 weiter dem Zwischenbehälter zugeführt.

Um den Filtereinsatz 15 zu reinigen und die Partikel aus dem Filtereinsatz 15 in die Rückspülleitung 3 abzuführen, wie in Fig. 6 skizziert, wird Spülwasser aus dem Zwischenbehälter unter Druck durch den Filter 14 in Rückspülrichtung geführt. Das Rückschlagventil 10 öffnet unter dem vorgegebenen Druck, das Rückschlagventil 13 verschließt die Versorgungsleitung 1 hingegen.

## Patentansprüche

1. Toiletteneinrichtung für ein Schienenfahrzeug mit spülwasserführenden Installationen und abwasserführenden Installationen, wobei die spülwasserführenden Installationen einen Zwischenbehälter (7) zur Speicherung von Spülwasser und eine Versorgungsleitung (1, 2) zur Zufuhr von Spülwasser zum Zwischenbehälter (7) umfassen, wobei die Versorgungsleitung (1, 2) einen Filter (14) zur Filterung des dem Zwischenbehälter (7) zugeführten Spülwassers umfasst, **dadurch gekennzeichnet, dass** die Versorgungsleitung (1, 2) so mit dem Zwischenbehälter (7) verbunden ist, dass Spülwasser aus dem Zwischenbehälter (7) durch den Filter zurückführbar ist, wobei die Toiletteneinrichtung eine Rückspülleitung (3) umfasst, welche mit dem Filter (14) verbunden ist und welche in eine abwasserführende Installation mündet.

2. Toiletteneinrichtung nach Anspruch 1, **dadurch gekennzeichnet, dass** die abwasserführenden Installationen ein mit Spülwasser spülbares Becken (12) umfassen, in welches die Rückspülleitung (3) mündet.

3. Toiletteneinrichtung nach einem der Ansprüche 1 oder 2, **dadurch gekennzeichnet, dass** sie ein Einlassventil (9) in der Versorgungsleitung (1, 2) zumindest zur Regelung der Zufuhr von Spülwasser zum Zwischenbehälter (7) umfasst.

4. Toiletteneinrichtung nach einem der Ansprüche 1 bis 3, **dadurch gekennzeichnet, dass** sie eine Vorrichtung zur Druckbeaufschlagung des Spülwassers im Zwischenbehälter (7) umfasst.

5. Toiletteneinrichtung nach einem der Ansprüche 1 bis 4, **dadurch gekennzeichnet, dass** die spülwasserführenden Installationen eine Spülwasserleitung (4) zur Abfuhr von Spülwasser aus dem Zwischenbehälter (7) zu einem spülbaren Becken (12) und ein Auslassventil (8) in der Spülwasserleitung (4) zur Regelung der Abfuhr von Spülwasser aus dem Zwischenbehälter (7) zu dem spülbaren Becken (12) umfassen.

6. Toiletteneinrichtung nach Anspruch 5, **dadurch gekennzeichnet, dass** das spülbare Becken Spüldüsen (5) umfasst, welche mit der Spülwasserleitung (4) hydraulisch verbunden sind und, dass das spülbare Becken wenigstens eine Rückspülöffnung (6) umfasst, welche mit der Rückspülleitung (3) hydraulisch verbunden sind.

7. Toiletteneinrichtung nach einem der Ansprüche 1 bis 6, **dadurch gekennzeichnet, dass** die Rückspülleitung (3) ein Überdruckventil (10) zum Verschließen der Rückspülleitung (3) umfasst, sobald der Druck des Spülwassers in der Rückspülleitung (3) unter einen vorgegebenen Schwellwert sinkt.

8. Toiletteneinrichtung nach einem der Ansprüche 1 bis 7, **dadurch gekennzeichnet, dass** die Versorgungsleitung (1, 2) ein Rückschlagventil (13) zum Verschließen der Versorgungsleitung (1, 2) für einen Fluss an Spülwasser vom Filter (14) zu einer dem Zwischenbehälter (7) gegenüberliegenden Mündung der Versorgungsleitung (1, 2) umfasst.

9. Toiletteneinrichtung nach einem der Ansprüche 1 bis 8, **dadurch gekennzeichnet, dass** der Filter (14) als Y-förmiges Rohrstück ausgebildet ist und einen ringförmigen Filtereinsatz (15) umfasst.

10. Schienenfahrzeug, **dadurch gekennzeichnet, dass** es mindestens eine Toiletteneinrichtung nach einem der Ansprüche 1 bis 9 umfasst.

11. Verfahren zum Betreiben einer Toiletteneinrichtung nach einem der Ansprüche 1 bis 9, **gekennzeichnet durch** folgende Verfahrensschritte:
a) Befüllen des Zwischenbehälters (7) mit Spülwasser, wobei das dem Zwischenbehälter (7) zugeführte Spülwassers durch einen Filter (14) geführt wird;
b) Spülen eines spülbaren Beckens (12) mit Spülwasser aus dem Zwischenbehälter (7) oder
c) Rückspülen des Filters (14) mit Spülwasser aus dem Zwischenbehälter (7) und Ableiten des Spülwassers in eine abwasserführende Installation.

12. Verfahren nach Anspruch 11, **dadurch gekennzeichnet, dass** die Toiletteneinrichtung ein Einlassventil (9) gemäß Anspruch 3 umfasst, wobei das Einlassventil (9) zur Ausführung des Verfahrensschritts a) offen ist oder geöffnet wird, wobei das Einlassventil (9) zur Ausführung des Verfahrensschritts b) geschlossen ist oder geschlossen wird und wobei das Einlassventil (9) zur Ausführung des Verfahrensschritts c) offen ist oder geöffnet wird.

13. Verfahren nach einem der Ansprüche 11 oder 12, **dadurch gekennzeichnet, dass** die Toiletteneinrichtung ein Auslassventil (8) gemäß Anspruch 5 umfasst, wobei das Auslassventil (8) zur Ausführung des Verfahrensschritts a) geschlossen ist oder geschlossen wird, wobei das Auslassventil (8) zur Ausführung des Verfahrensschritts b) offen ist oder geöffnet wird und wobei das Auslassventil (8) zur Ausführung des Verfahrensschritts c) geschlossen ist oder geschlossen wird.

14. Verfahren nach einem der Ansprüche 11 bis 13, **dadurch gekennzeichnet, dass** das Spülwasser im Zwischenbehälter vor der Ausführung der Verfahrensschritte b) oder c) mit einem Überdruck beaufschlagt wird.

15. Verfahren nach einem der Ansprüche 11 bis 14, **dadurch gekennzeichnet, dass** Verfahrensschritt c) in Abhängigkeit von einer in Verfahrensschritt a) erfassten Durchflussmenge an Spülwasser durch den Filter (14) oder in Abhängigkeit von einem in Verfahrensschritt a) erfassten Druckunterschied in der Versorgungsleitung (1, 2) vor und nach dem Filter (14) oder in Abhängigkeit von einer in Verfahrensschritt a) erfassten Zeit zum Befüllen des Zwischenbehälters (7) mit einer vorgegebenen Menge an Spülwasser ausgeführt wird.

## Claims

1. Toilet device for a rail vehicle comprising flushing water-carrying installations and waste water-carrying installations, wherein the flushing water-carrying installations comprise an intermediate tank (7) for storing flushing water and a supply line (1, 2) for supplying the intermediate tank (7) with flushing water, wherein the supply line (1, 2) comprises a filter (14) for filtering the flushing water supplied to the intermediate tank (7), **characterized in that** the supply line (1, 2) is connected to the intermediate tank (7) in such a manner that flushing water can be conducted back from the intermediate tank (7) through the filter, wherein the toilet device comprises a backflushing line (3) which is connected to the filter (14) and which opens into a waste water-carrying installation.

2. Toilet device according to Claim 1, **characterized in that** the waste water-carrying installations comprise a bowl (12) that can be flushed with flushing water, into which the backflushing line (3) opens.

3. Toilet device according to one of Claims 1 or 2, **characterized in that** it comprises an inlet valve (9) in the supply line (1, 2) at least to control the supply of flushing water to the intermediate tank (7).

4. Toilet device according to one of Claims 1 to 3, **characterized in that** it comprises a device for the application of pressure to the flushing water in the intermediate tank (7).

5. Toilet device according to one of Claims 1 to 4, **characterized in that** the flushing water-carrying installations comprise a flushing water line (4) to convey flushing water from the intermediate tank (7) to a flushable bowl (12) and an outlet valve (8) in the flushing water line (4) to control the removal of flushing water from the intermediate tank (7) to the flushable bowl (12).

6. Toilet device according to Claim 5, **characterized in that** the flushable bowl comprises flushing nozzles (5) which are hydraulically connected to the flushing water line (4) and **in that** the flushable bowl comprises at least one backflushing opening (6) which is/are hydraulically connected to the backflushing line (3).

7. Toilet device according to one of Claims 1 to 6, **characterized in that** the backflushing line (3) comprises an overpressure valve (10) for closing the backflushing line (3) as soon as the pressure of the flushing water in the backflushing line (3) drops below a predetermined threshold value.

8. Toilet device according to one of Claims 1 to 7, **characterized in that** the supply line (1, 2) comprises a non-return valve (13) for closing the supply line (1, 2) for a flow of flushing water from the filter (14) to an outlet in the supply line (1, 2) lying opposite the intermediate tank (7) .

9. Toilet device according to one of Claims 1 to 8, **characterized in that** the filter (14) is configured as a Y-shaped pipe section and comprises a ring-shaped filter insert (15) .

10. Rail vehicle **characterized in that** it comprises at least one toilet device according to one of Claims 1 to 9.

11. Method for operating a toilet device according to one of Claims 1 to 9, **characterized by** the following process steps:
a) filling of the intermediate tank (7) with flushing water, wherein the flushing water supplied to the intermediate tank (7) is conveyed through a filter (14) ;
b) flushing of a flushable bowl (12) with flushing water from the intermediate tank (7) or
c) backflushing of the filter (14) with flushing water from the intermediate tank (7) and diversion of the flushing water into a waste water-carrying installation.

12. Method according to Claim 11, **characterized in that** the toilet device comprises an inlet valve (9) according to Claim 3, wherein the inlet valve (9) is open or opened to carry out the process step a), wherein the inlet valve (9) is closed or becomes closed to carry out process step b) and wherein the inlet valve (9) is open or opened to carry out the process step c) .

13. Method according to one of Claims 11 or 12, **characterized in that** the toilet device comprises an outlet valve (8) according to Claim 5, wherein the outlet valve (8) is closed or becomes closed to carry out process step a), wherein the outlet valve (8) is open or opened to carry out process step (b) and wherein the outlet valve (8) is closed or becomes closed to carry out the process step (c).

14. Method according to one of Claims 11 to 13, **characterized in that** the flushing water in the intermediate tank is exposed to overpressure before the carrying out of process steps b) or c) .

15. Method according to one of Claims 11 to 14, **characterized in that** process step c) is carried out depending on a flow volume of flushing water through the filter (14) detected in process step a) or depending on a pressure difference detected in process step a) in the supply line (1, 2) upstream and downstream of the filter (14) or depending on a time detected for the filling of the intermediate tank (7) with a predetermined amount of flushing water in process step a).

## Revendications

1. Toilettes d'un véhicule ferroviaire, comprenant des installations de conduite d'eau de lavage et des installations de conduite d'eau usée, les installations de conduite d'eau de lavage comprenant un récipient (7) intermédiaire d'emmagasinage d'eau de lavage et un conduit (1, 2) d'alimentation pour envoyer de l'eau de lavage au récipient (7) intermédiaire, le conduit (1, 2) d'alimentation comprenant un filtre (14) pour filtrer l'eau de lavage envoyée au récipient (7) intermédiaire, **caractérisées en ce que** le conduit (1, 2) d'alimentation communique avec le récipient (7) intermédiaire, de manière à pouvoir retourner l'eau de lavage du récipient (7) intermédiaire dans le filtre, les toilettes comprenant un conduit (3) de lavage à contre-courant, qui communique avec le filtre (14) et qui débouche dans une installation de conduite d'eau usée.

2. Toilettes suivant la revendication 1, **caractérisées en ce que** les installations de conduite d'eau usée comprennent une cuvette (12), qui peut être lavée par de l'eau de lavage et dans laquelle débouche le conduit (3) de lavage à contre-courant.

3. Toilettes suivant l'une des revendications 1 ou 2, **caractérisées en ce qu'**elles comprennent un robinet (9) d'entrée dans le conduit (1, 2) d'alimentation, au moins pour régler l'envoi d'eau de lavage au récipient (7) intermédiaire.

4. Toilettes suivant l'une des revendications 1 à 3, **caractérisées en ce qu'**elles comprennent un système de mise sous pression de l'eau de lavage dans le récipient (7) intermédiaire.

5. Toilettes suivant l'une des revendications 1 à 4, **caractérisées en ce que** les installations de conduite d'eau de lavage comprennent un conduit (4) pour de l'eau de lavage, pour évacuer de l'eau de lavage du récipient (7) intermédiaire vers une cuvette (12) pouvant être lavée, et un robinet (8) de sortie dans le conduit (4) pour de l'eau de lavage, pour régler l'évacuation de l'eau de lavage du récipient (7) intermédiaire vers la cuvette (12) pouvant être lavée.

6. Toilettes suivant la revendication 5, **caractérisées en ce que** la cuvette pouvant être lavée comprend des buses (5) de lavage, qui communiquent hydrauliquement avec le conduit (4) pour de l'eau de lavage et **en ce que** la cuvette pouvant être lavée comprend au moins une ouverture (6) de lavage à contre-courant, qui communiquent hydrauliquement avec le conduit (3) de lavage à contre-courant.

7. Toilettes suivant l'une des revendications 1 à 6, **caractérisées en ce que** le conduit (3) de lavage à contre-courant comprend une soupape (10) de surpression pour fermer le conduit (3) de lavage à contre-courant dès que la pression de l'eau de lavage dans le conduit (3) de lavage à contre-courant s'abaisse en-dessous d'une valeur de seuil donnée à l'avance.

8. Toilettes suivant l'une de revendications 1 à 7, **caractérisées en ce que** le conduit (1, 2) d'alimentation comprend un clapet antiretour (13) pour fermer le conduit (1, 2) d'alimentation pour un flux d'eau de lavage du filtre (14) à une embouchure, opposée au récipient (7) intermédiaire, du conduit (1, 2) d'alimentation.

9. Toilettes suivant l'une des revendications 1 à 8, **caractérisée en ce que** le filtre (14) est constitué en pièce tubulaire en forme de Y et comprend un insert (15) de filtre annulaire.

10. Véhicule ferroviaire, **caractérisé en ce qu'**il comprend au moins des toilettes suivant l'une des revendications 1 à 9.

11. Procédé pour faire fonctionner des toilettes suivant l'une des revendications 1 à 9, **caractérisé par** les stades de procédé suivants :
a) on remplit le récipient (7) intermédiaire d'eau de lavage, l'eau de lavage envoyée au récipient (7) intermédiaire passant dans un filtre (14),
b) on lave une cuvette (12) pouvant être lavée par de l'eau de lavage provenant du récipient (7) intermédiaire ou
c) on lave le filtre (14) à contre-courant par de l'eau de lavage provenant du récipient (7) intermédiaire et on évacue l'eau de lavage dans une installation de conduite d'eau usée.

12. Procédé suivant la revendication 11, **caractérisé en ce que** les toilettes comprennent un robinet (9) d'entrée suivant la revendication 3, le robinet (9) d'entrée étant, pour réaliser le stade a) du procédé, ouvert ou on l'ouvre, le robinet (9) d'entrée étant, pour la réalisation du stade b) du procédé, fermé ou on le ferme et le robinet (9) d'entrée étant, pour la réalisation du stade c) du procédé, ouvert ou on l'ouvre.

13. Procédé suivant l'une des revendications 11 à 12, **caractérisé en ce que** les toilettes comprennent un robinet (8) de sortie suivant la revendication 5, le robinet (8) de sortie étant, pour la réalisation du stade a) du procédé, fermé ou on le ferme, le robinet (8) de sortie étant, pour la réalisation du stade b) du procédé, ouvert ou on l'ouvre, et le robinet (8) de sortie étant, pour la réalisation du stade c) du procédé, fermé ou on le ferme.

14. Procédé suivant l'une des revendications 11 à 13, **caractérisé en ce que** l'on met en surpression l'eau de lavage dans le récipient intermédiaire avant de réaliser les stades b) ou c) du procédé.

15. Procédé suivant l'une des revendications 11 à 14, **caractérisé en ce que** l'on réalise le stade c) du procédé en fonction d'un débit, détecté dans le stade a) du procédé, d'eau de lavage passant dans le filtre (14) ou en fonction d'une différence de pression, détectée au stade a) du procédé, dans le conduit (1, 2) d'alimentation avant et après le filtre (14) ou en fonction d'un temps, détecté dans le stade a) du procédé, de remplissage du récipient (7) intermédiaire d'une quantité donnée à l'avance d'eau de lavage.
